# EUROPEAN PATENT APPLICATION

(11) **EP 1 628 429 A2**
(43) Date of publication of application: **22.02.2006**
(21) Application number: 05017505.8
(22) Date of filing: 11.08.2005
(51) Int. Cl.: H04L 1/16

(54) **Method for transmitting information with an acknowledgement scheme and respective communication system**

(30) Priority: 19.08.2004 US 602734 P
(71) Applicant: Infineon Technologies AG, 81669 München (DE)
(72) Inventor: Aronson, Simcha, 43581 Ra'anana (IL); Shapiro, Israel, Kelowna, BC V1W 1E6 (CA); Shirron, Etan, 43393 Ra'anana (IL)
(74) Representative: Banzer, Hans-Jörg

(57) **Abstract**

In a communication system, preferably a wireless communication system according to the MBOA standard, communication information is transmitted from a transmitting device to a receiving device. The receiving device checks whether the information has been received without errors. If so, the transmitting device transmits an acknowledgement notification to the transmitting device, the acknowledgement notification comprising an indication on the capability of the receiving device to receive further information from the transmitting device. In particular, the acknowledgement notification comprises the maximum number of additional frames which the receiving device can receive from the transmitting device and/or the free buffer size of the receiving device.

## Description

The present invention relates to a method for transmitting information between a transmitting device and a receiving device in a communication system, preferably a wireless communication system according to the UWB ("Ultra-Wideband") technology, more preferably a MBOA communication system ("MultiBand OFDM Alliance"), as well as a respective communication system.

According to the present standard for the MAC layer ("Media Access Controller") for MBOA communication systems, there is only provided a minimum flow control mechanism for burst acknowledgements. This flow control mechanism is based only on the MAC layer buffer size information, but does not allow the higher networking layers above the MAC layer to actively participate in the flow control mechanism.

Furthermore, in the MBOA MAC layer, there is not only a burst acknowledgement mode for frame acknowledgement, but also a so-called immediate acknowledgement mode and a no-acknowledgement mode. In the immediate acknowledgement mode, the receiver sends an immediate acknowledgement frame to the transmitter after it has received a frame without errors from the transmitter. In the burst acknowledgement mode, the receiver sends a burst acknowledgement frame after having received a frame with a burst acknowledgement request from the transmitter. The burst acknowledgement frame lists all the previous frames of the burst acknowledgement type that were received without errors. Finally, in the no-acknowledgement mode, the receiver does not send any acknowledgement frames to the transmitter even if a correct frame has been received. This acknowledgement scheme is in particular appropriate for multicast or broadcast frames because it is hard and inefficient to support acknowledgements from multiple sources.

Therefore, there is a requirement for a full and unified acknowledgement scheme to perform MAC and higher layer flow control for all acknowledgement types.

The object underlying the present invention is to provide a method for transmitting information between a transmitting device and a receiving device in a communication system as well as a respective communication system which provides such a full and unified acknowledgement scheme.

According to the present invention, this object is achieved by a method for transmitting information between a transmitting device and a receiving device in a communication system, comprising the steps of transmitting information from the transmitting device to the receiving device, checking whether the receiving device has received the information without errors, and transmitting an acknowledgement notification from the receiving device to the transmitting device if the receiving device has received the information without errors, the acknowledgement notification comprising an indication on a capability of the receiving device to receive further information from the transmitting device.

The communication between the transmitting device and the receiving device is preferably carried out on a frame basis, and consequently the receiving device sends the acknowledgement notification to the transmitting device after having received a frame without errors from the transmitting device. Depending on the respective acknowledgement mode, the acknowledgement notification can comprise an acknowledgement of the immediate acknowledgement type or burst acknowledgement type.

According to the preferred embodiment of the present invention, the acknowledgement notification comprises information on a maximum number of additional frames (not depending on the frame size) which can be handled by the queue comprising a buffer of the receiving device. Furthermore, the acknowledgement notification preferably also comprises an information on the free buffer size of the receiving device's buffer.

The communication information and the acknowledgement notification are preferably transmitted on the MAC layer between the transmitting device and the receiving device. The present invention also provides a mechanism for forwarding the acknowledgement notification from the MAC layer to higher layers, and the present invention also provides a mechanism for performing queue polling, which allows the higher networking layers above the MAC layer at the transmitting device to check the status of specific queues at the receiving device.

The present invention can preferably be used in MBOA communication systems according to the UWB technology. However, as a matter of course, the present invention is not restricted to this preferred field of technology, but may be applied to all transmission standards with acknowledgement notifications, such as Hiper-LAN, Ethernet or USB. Furthermore, the mechanism of the present invention can be used for supporting asynchronous and isochronous flows and allows a full and unified scheme to perform MAC layer flow control as well as higher layer flow control for all acknowledgment types, including the burst acknowledgement type, the immediate acknowledgment type, and the no-acknowledgement type.

In the following, preferred embodiments of the present invention will be explained in detail with reference to the drawings.
Fig. 1 shows a simplified block diagram of a communication system according to the present invention,
Fig. 2 shows a possible format for an immediate acknowledgement frame according to a preferred embodiment of the present invention,
Fig. 3 shows a possible format of a burst acknowledgement frame according to a preferred embodiment of the present invention,
Fig. 4 - Fig. 7 show examples for primitives for supporting a flow control in accordance with the present invention,
Fig. 8 shows a chart for explaining a flow control mechanism according to the present invention,
Fig. 9 and Fig. 10 show primitives proposed by the present invention for queue polling,
Fig. 11 shows a possible format of a queue polling control frame according to a preferred embodiment of the present invention,
Fig. 12 and Fig. 13 show further primitives for queue polling in accordance with the present invention,
Fig. 14 shows a possible format for a queue polling command frame according to a preferred embodiment of the present invention,
Fig. 15 shows another representation of a queue polling command frame format according to a preferred embodiment of the present invention, and
Fig. 16 shows a chart representing a complete flow control mechanism including queue polling in accordance with a preferred embodiment of the present invention.

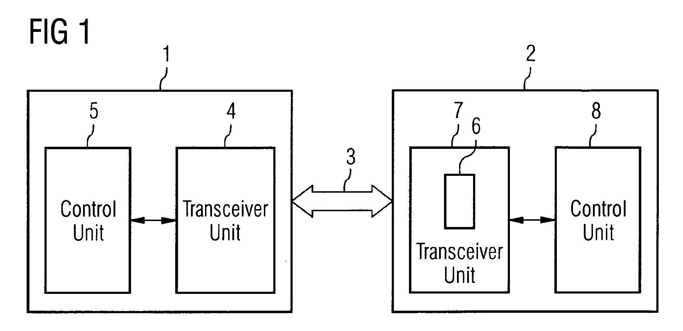

Fig. 1 shows a communication system, for example a wireless communication system according to the MBOA transmission standard, which comprises a transmitting device 1 and receiving device 2. The transmitting device 1 and the receiving device 2 are coupled by a transmission channel/transmission link and comprise each a transceiver section 4, 7 for transmitting and receiving information from the respective other device. Furthermore, both devices comprise a control unit 5, 8 for controlling the functionality and operation of the respective device. The receiving device 2 comprises in its transceiver section 7 a queue with a buffer 6 for buffering communication frames which the receiving device 2 receives from the transmitting device 1 through the communication channel 3. The communication information transmitted from the transmitting device 1 to the receiving device 2 may comprise data as well as audio and video information.

The communication system shown in Fig. 1 provides a full and unified scheme to perform MAC and higher layer flow control of all acknowledgement types, including acknowledgements of the burst acknowledgement type (burst-ACK), immediate acknowledgement type (immediate-ACK), and no-acknowledgement type (no-ACK). Furthermore, the communication system is also arranged such that both asynchronous and isochronous flows can support flow control with the mechanisms described in the following.

As already mentioned above, the communication information is transmitted from the transmitting device 1 to the receiving device 2 in the form of a sequence of a plurality of communication frames. The communication information received by the receiving device 2 is buffered in the buffer 6 and, thereafter, processed and evaluated by the control unit 8 of the receiving device 2.

The control unit 8 of the receiving device 2 checks whether the communication information has been received from the transmitting device 1 without errors. The error checking can be performed by using any error checking algorithm known in the art, for example CRC (cyclic redundancy check) error checking. If the communication information has been received from the receiving device 2 without errors, the control unit 8 controls the transceiver unit 7 of the receiving device 2 such that an acknowledgement notification is transmitted from the transceiver unit 7 of the receiving device 2 to the transmitting device 1, the acknowledgement notification informing the transmitting device 1 on the correct receipt of the communication information.

The process of sending the acknowledgement notification from the receiving device 2 to the transmitting device 1 depends on the respective acknowledgement mode as implemented in the communication system. In the so-called immediate acknowledgement mode, the receiving device 2 sends an immediate acknowledgement frame as the aforesaid acknowledgement notification to the transmitting device after it has received a complete communication frame without errors from the transmitting device. In the burst acknowledgement mode, the receiving device 2 sends a burst acknowledgement frame to the transmitting device 1 after having received a communication frame with an explicit burst acknowledgement request from the transmitting device 1. The burst acknowledgement frame lists all the previous communication frames of the burst acknowledgement type that were received by the receiving device 2 without errors. Finally, in the no-acknowledgement mode, the receiving device 2 does not send any acknowledgement frames or acknowledgement notifications to the transmitting device 1 even if a correct communication frame has been received.

In the following, however, it is assumed that an acknowledgement notification, either according to the immediate acknowledgement type or according to the burst acknowledgement type, is sent from the receiving device 2 to the transmitting device 1, thereby notifying the transmitting device 1 of the correct receipt of a communication frame through the communication channel 3, and in particular the acknowledgement notification comprises information on the capability of the receiving device 2 to receive further communication information from the transmitting device 1. In other words, with the acknowledgement notification the receiving device 2 informs the transmitting device 1 whether it has sufficient capacity to receive further communication frames from the transmitting device 1.

The acknowledgement notification preferably comprises information on a maximum number of additional communication frames which can be received by the receiving device from the transmitting device, and consequently it is beneficial if the acknowledgement notification comprises information on the free buffer size of the buffer of the queue 6 of the receiving device 2, which is available for receiving further communication frames or communication information from the transmitting device.

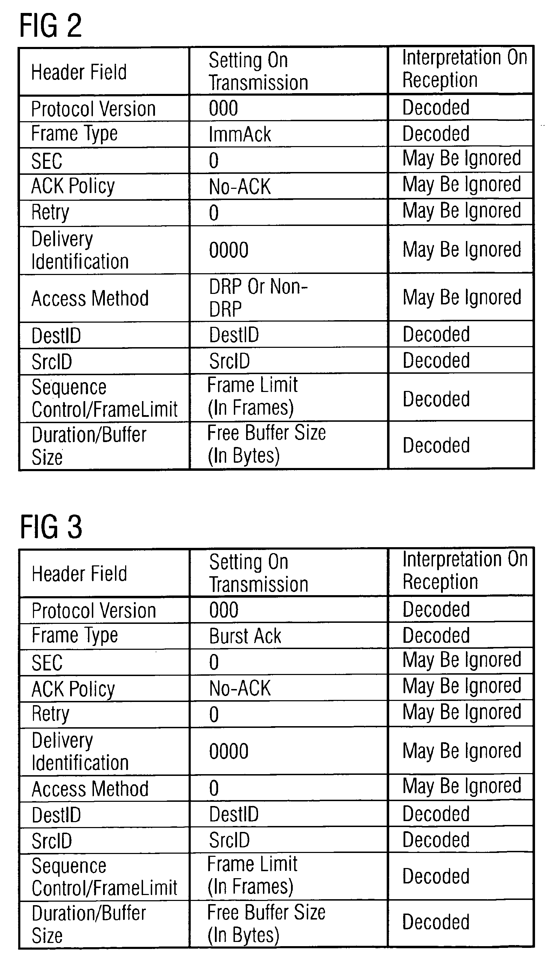

Fig. 2 shows a preferred embodiment for the format of an immediate acknowledgement frame, the frame comprising a header field with a plurality of control fields as indicated in the first column of the format shown in Fig. 2. In other words, the first column of the format of Fig. 2 includes the names or meanings of the individual control fields. The second column of Fig. 2 includes the settings of these control fields upon transmission, and the third column of Fig. 2 includes an indication whether the respective control field is to be decoded or may be ignored from the MAC of the receiving communication device. Except for the last two control fields, the remaining control fields have been taken from the current MBOA MAC standard which is hereby incorporated by reference.

The control field "Protocol version" defines the version of the transmission protocol, while the control field "Frame type" defines the type of the acknowledgement frame with "ImmAck" designating an immediate acknowledgement frame. The control field "SEC" is the security bit in the MBOA MAC frame header and defines if the frame payload is encrypted or not. The control filed "ACK policy" defines the acknowledgement policy, while the control field "Retry" indicates whether the present acknowledgement frame is a re-transmitted acknowledgement frame or not. The control field "Delivery Identification" identifies during the transmission the acknowledgement frame itself, and the control field "Access method" defines whether the transmission is in accordance with the distributed reservation protocol (DRP) or not (DRP means that the transmission time is guaranteed and respected by other communication devices in the vicinity). The control fields "DestID" and "SrcID" define an identifier for the destination device and the source device, respectively.

In addition to the above-described control fields, the immediate acknowledgement frame shown in Fig. 2 also includes two additional control fields "Sequence Control/Frame Limit" and "Duration/Buffer size". The control field "Sequence Control/FrameLimit" defines the maximum number of additional communication frames which the queue 6 of the respective communication device sending the immediate acknowledgement frame can handle. The control field "Duration/Buffer size", on the other hand, defines the free buffer size (in bytes) which the queue 6 of the respective communication device sending the immediate acknowledgement frame can handle. Both control fields are of importance for the communication device receiving the immediate acknowledgement frame so as to know whether the respective other communication device can handle further communication frames.

Fig. 3 shows an example for a new format for a burst acknowledgement frame in accordance with a preferred embodiment of the present invention.

As can be seen from a comparison between Fig. 3 and Fig. 2, the format of the burst acknowledgement frame is substantially similar to the format of the immediate acknowledgement frame, except for the control field "Frame type" which now has the value "Burst Ack" indicating the burst acknowledgement frame type. As regards the other control fields of the header field of the burst acknowledgement frame, reference can be made to the above explanations with respect to Fig. 2.

In order to allow the networking layers above the MAC layer to support flow control, it is necessary to add new MAC-SAP (service access point) primitives and to change the existing ones respectively for the software-based control of the communication between the transmitting device 1 and the receiving device 2, these primitives in particular being used by the respective control units 5, 8 for the software-based control of the transmission of the communication frames between both communication devices. As regards the existing MAC-SAP primitives, reference can again be made to the current MBOA MAC standard and the respective explanations thereof on these primitives and the fields thereof, which is hereby incorporated by reference.

As regards the existing primitives, a parameter "BufferSize" indicating the free buffer size and a new parameter "FrameLimit" indicating the maximum number of additional frames are added to the existing confirmation primitives to support higher layer flow control at the transmitting side. The indication primitives at the receiving side do not include the frame data itself. They are used to indicate data arrival only.

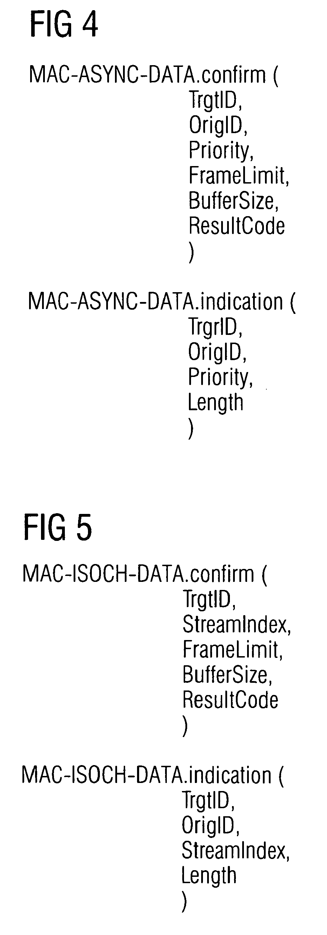

Fig. 4 shows the new format for the confirmation primitive MAC-ASYNC-DATA.confirm and the new indication primitive MAC-ASYNC-DATA.indication for asynchronous data flows. The new fields "FrameLimit" and "BufferSize" have already been explained above. Furthermore, the confirmation primitive includes the field "TrgtID" which identifies the target device (that is the receiving device) as stated in the respective MAC header. Furthermore, both primitives include the field "OrigID" which identifies the originating device as stated in the respective MAC header. The field "Priority" describes the user priority as defined in the MAC header of the communication frames, and in particular the field "Priority" may define a specific receiving queue for processing the communication frames. The field "ResultCode" of the confirmation primitive includes a value for indicating a result of a requested operation, and for example the value of this field may be "succeeded", "failed", "blocked" etc. Finally, the field "Length" of the indication primitive indicates the length of the respective communication frame in bytes.

Fig. 5 shows in a similar manner the new format of the confirmation primitive MAC-ISOCH-DATA.confirm and the indication primitive MAC-ISOCH-DATA.indication for isochronous data flows. The confirmation primitive shown in Fig. 5 again includes the fields "FrameLimit" and "BufferSize" similar to the confirmation primitive for asynchronous data flows as shown in Fig. 4. Furthermore, the confirmation primitive for isochronous data flows includes a field "StreamIndex" which is already known from the current MBOA MAC standard. For frames that use the DRP allocation type, it is possible to support different data streams between the same communication devices. The "StreamIndex" parameter differentiates between different data flows that belong to the same transmitting and receiving device. The "StreamIndex" field is also included in the indication primitive shown in Fig. 5.

Additional primitives are needed to support higher layer back-pressure at the receiving side. The higher layers are notified when a new data frame arrives. The higher layers request a frame from a queue and receive a response containing the frame data. In case the frame data is invalid, this will be indicated to the respective other communication device by means of the "ResultCode" field.

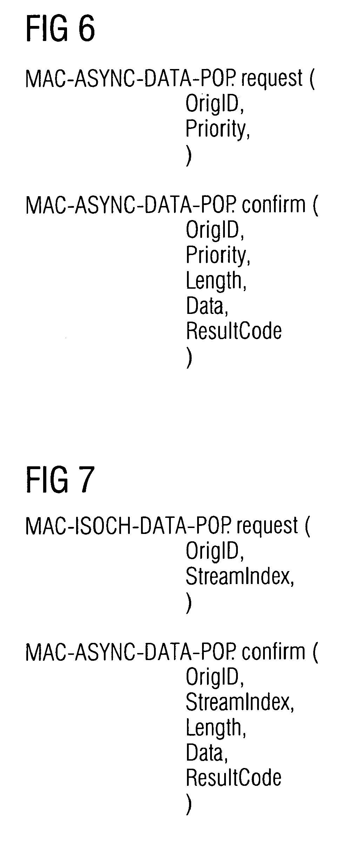

Fig. 6 shows the new MAC-SAP primitives for asynchronous data flows. The new primitives comprise a new request primitive MAC-ASYNCH-DATA-POP.request and a new confirmation primitive MAC-ASYNCH-DATA-POP.confirm. The request primitive is used to request a new data frame via the respective control unit 8 from the respective queue, the parameters/control fields of the request primitive having already been discussed before. The new confirmation primitive is used to indicate to the MAC layer whether the frame data is valid or not. The confirmation primitive comprises a "DATA" field which is the actual data of the data frame. Furthermore, it comprises a field "Length" which defines the length of the data frame in bytes, and a field "ResultCode" which includes, as already discussed before, information on the result of the requested operation and, for example, can include the values "succeeded", "failed", "blocked" etc. The "OrigID" field of both new primitives defines the originating device as stated in its MAC header, and the field "Priority" defines the user priority as defined in the MAC header of the respective frame and indicates a specific receiving queue. A high priority queue will be handled before a low priority queue.

Fig. 7 shows possible formats for the new request and confirmation primitives for isochronous data flows. The new request primitive MAC-ISOCH-DATA-POP.request comprises the fields "OrigID" and "StreamIndex" which both have already been discussed before. The new confirmation primitive MAC-ASYNC-DATA-POP.confirm comprises the fields "OrigID", "StreamIndex", "Length", "Data", and "ResultCode" which have also already been discussed before so that reference can be made to the foregoing explanations.

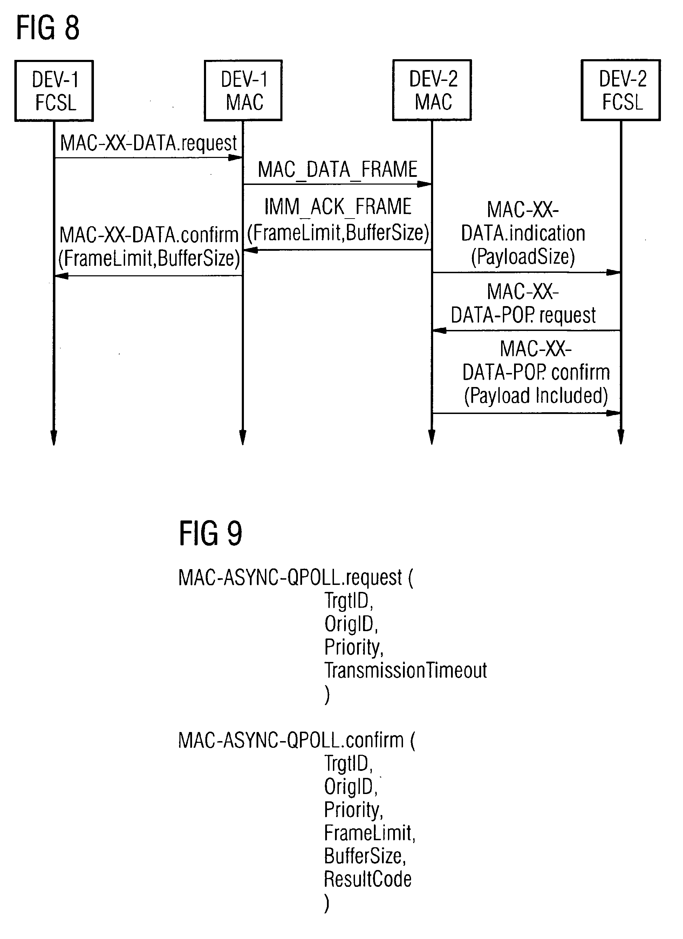

Fig. 8 shows an example for a MBOA MAC flow control mechanism.

According to Fig. 8, it is assumed that communication frames are transmitted from a first communication device DEV-1 (transmitting device) to a second communication device DEV-2 (receiving device). A communication data frame MAC_DATA_FRAME is transmitted from the MAC layer of the communication device DEV-1 to the MAC layer of the communication device DEV-2. The MAC layer of the communication device DEV-2 informs the FCSL (frame convergence sub layer) of the communication device DEV-2 when the new data frame has arrived by using the MAC-XX-DATA.indication primitive including information on the payload size of the received data frame. Thereafter, the FCSL of the communication device DEV-2 requests the respective communication frame from the queue of the communication device DEV-2 by using the MAC-XX-DATA-POP.request primitive, and the MAC layer of the communication device DEV-2 transmits the data, that is the payload included in the received communication frame, to the FCSL of the communication device DEV-2 by using the MAC-XX-DATA-POP.confirm primitive.

Furthermore, as can be taken from Fig. 8, the MAC layer of the communication device DEV-2 (receiving device) transmits an immediate frame acknowledgement notification IMM_ACK_FRAME, including the parameters "FrameLimit" and "BufferSize" to the MAC layer of the transmitting communication device DEV-1. The transmitting application of the communication device DEV-1 can use the "FrameLimit" and "BufferSize" parameters to change the transmission rate according to the ability of the receiving communication device DEV-2 to empty its MAC buffers. The MAC layer of the transmitting communication device DEV-1 informs the FCSL of the communication device DEV-1 on the "FrameLimit" and "BufferSize" parameters by using the MAC-XX-DATA.confirm primitive.

The above-described mechanism can be combined with a queue polling scheme. Queue polling allows the networking higher layers above the MAC layer at the transmitting side to check the status of specific queues at the receiving side. Also, the transmitting MAC layer can use queue polling to resolve flow-off situations. A flow-off situation is a case where the parameter "BufferSize" = 0 was received in an acknowledgement frame. The MAC layer or higher layers can poll the full queue to check when it is possible to send additional frames to it. Queue polling can also be used as a flow control mechanism for no-acknowledgement flows. It enables the checking of the most recent status of each queue without actually sending data traffic to the receiving side.

For asynchronous data flows, the new MAC-SAP queue polling primitives shown in Fig. 9 can be used. These new MAC-SAP queue polling primitives include a queue polling request primitive MAC-ASYNC-QPOLL.request and a queue polling confirmation primitive MAC-ASYNC-QPOLL.confirm. The parameters "TrgtID", "OrigID", "Priority", "FrameLimit", "BufferSize", and "ResultCode" have already been discussed before with respect to the flow control primitives shown in Figs. 4-7. As regards these parameters, reference can be made to the above explanations. In addition, the request primitive includes the parameter "TransmissionTimeout" which defines the duration of time the respective request will stay valid until a confirmation is received. If no confirmation to the request is received by the time stated in this parameter, the operation will halt, and the polling MAC layer has to handle this situation either by performing another request or other tasks.

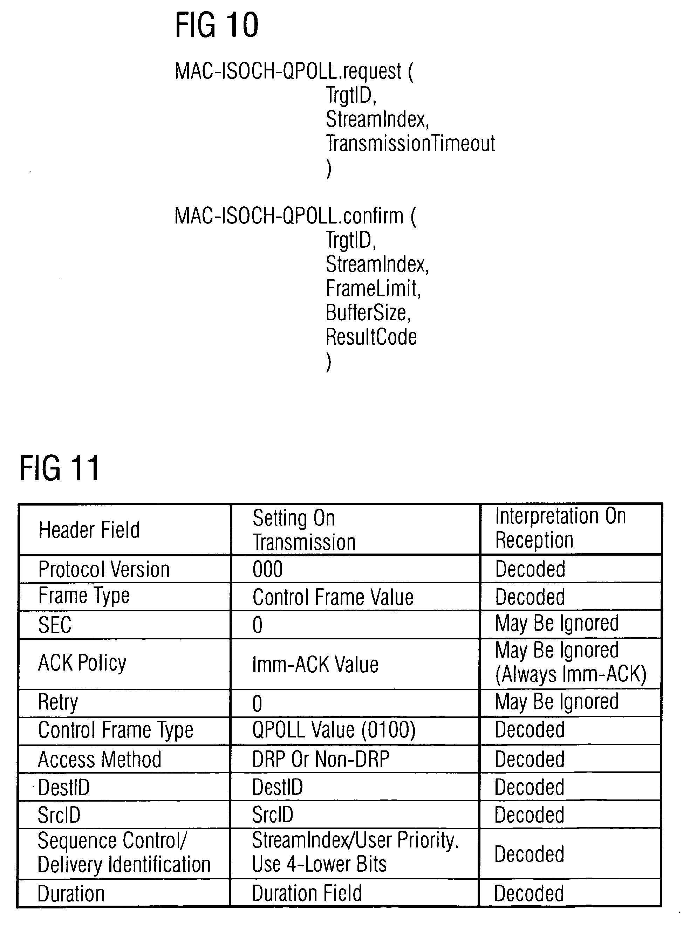

Fig. 10 shows the respective primitives MAC-ISOCH-QPOLL.request and MAC-ISOCH-QPOLL.confirm for isochronous data flows. All the parameters shown in Fig. 10 have already been explained before.

The queue polling request primitives initiate the generation of a queue polling control frame from the transmitting MAC layer to the receiving MAC layer. The queue polling confirmation primitives are generated by the transmitting MAC layer to its higher layers upon reception of an immediate acknowledgement frame that was received after a queue polling control frame was sent. The immediate acknowledgement buffer size is indicated in the respective primitive.

For MAC-SAP flow control, a new control frame has to be defined in the MBOA MAC layer. This frame is the queue polling control frame. The format of the queue polling control frame is shown in Fig. 11.

Most of the control fields of the control frame shown in Fig. 11 have already been discussed before with respect to Fig. 2 and Fig. 3 so that reference can be made to the explanations with respect to Fig. 2 and Fig. 3. However, the format of the queue polling control frame includes an additional field "Control Frame Type" which indicates the type of the control frame and, in the present case, is transmitted with the value "0100" corresponding to a queue polling value and indicating a queue polling control frame. Furthermore, the queue polling control frame includes a field "Sequence Control/Delivery identification" which is transmitted with the value of the "StreamIndex" parameter and the "User Priority" parameter, the four lower bits being used for this control field. As already discussed before, for frames that use the non-DRP allocation type, it is possible to support different queues between the same communication devices. The individual queues correspond to different application priorities, meaning that a high priority queue will be handled before a low priority queue. The "User Priority" parameter differentiates between different data flows that belong to the same transmitting and receiving device. Furthermore, the queue polling control frame includes the field "Duration" indicating the duration of the queue polling control frame.

It is also possible to support queue polling originating in the DME (device management entity) of the transmitting device. It can be implemented, for example, in case MAC-SAP queue polling is not desired.

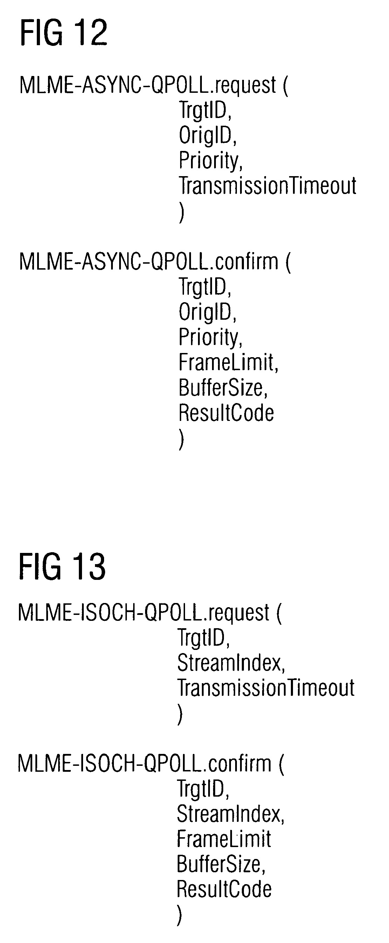

Fig. 12 shows the format of the queue polling request primitive MLME-ASYNC-QPOLL.request and the queue polling confirmation primitive MLME-ASYNC.QPOLL.confirm for asynchronous data flows.

Furthermore, Fig. 13 shows the queue polling request primitive MLME-ISOCH-QPOLL.request and the queue polling confirmation primitive MLME-ISOCH-QPOLL.confirm for isochronous data flows.

The parameters of the primitives shown in Fig. 12 and Fig. 13 have already been discussed before.

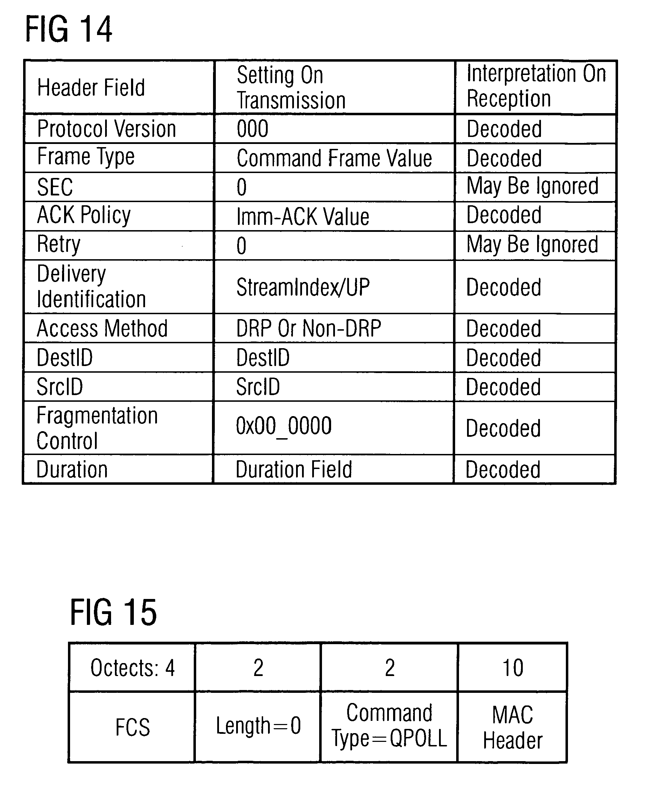

The queue polling request primitives initiate the generation of a queue polling command frame from the transmitting MAC layer to the receiving MAC layer. The queue polling confirmation primitives are generated by the transmitting MAC layer to its higher layers upon reception of an immediate acknowledgement frame that was received after a queue polling command frame was sent. The immediate acknowledgement buffer size is indicated in the primitive. For MLME-SAP flow control, a new command frame has to be defined in the MBOA MAC layer. This frame is the queue polling command frame. The format of the queue polling command frame is shown in Fig. 14.

As can be taken from Fig. 14, the queue polling command frame includes a field "Delivery Identification" which, again, is transmitted with the "StreamIndex"/"User Priority" parameter values. Furthermore, the queue polling command frame includes a field "Fragmentation Control" which can be used to control the fragmentation during the communication process.

Fig. 15 shows the format of a queue polling command frame in terms of the octet structure, and four octets are used as a frame check sequence (FCS), while two octets are used to indicate a data length of "0", two further octets being used to define the command type as a queue polling command type (QPOLL). Finally, the queue polling command frame format includes ten octets for the MAC header shown in Fig. 14.

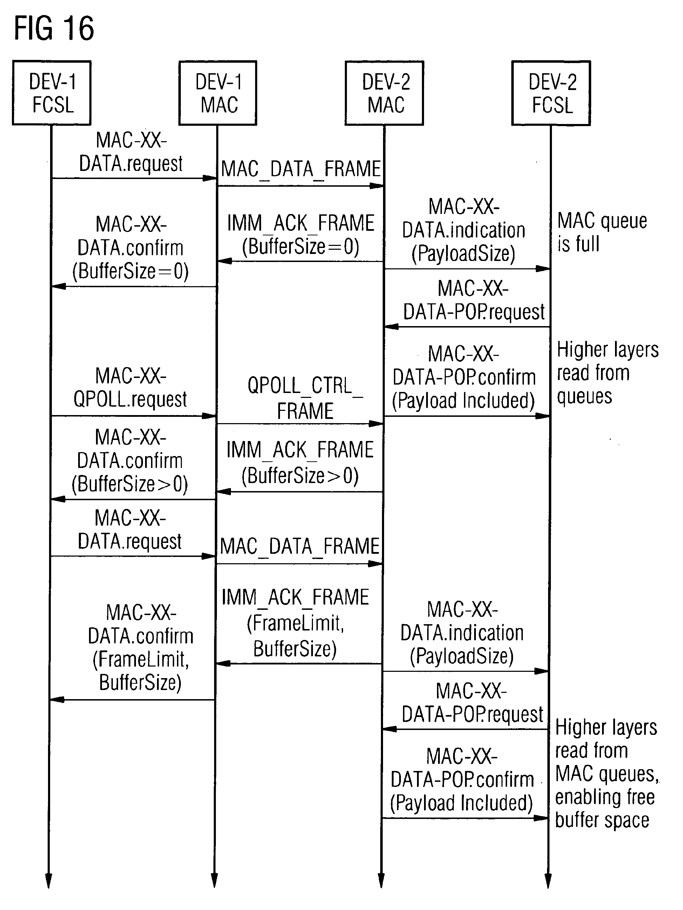

Fig. 16 shows the data flow between a transmitting communication device DEV-1, in particular the FCSL and MAC layers of the transmitting communication device DEV-1, and the respective layers of a receiving communication device DEV-2.

The beginning of the data flow shown in Fig. 16 is similar to the data flow shown in Fig. 8 with respect to the transmission of the immediate acknowledgement frame, however assuming that a buffer size of "0" is transmitted from the MAC layer of the communication device DEV-2 to the MAC layer of the communication device DEV-1, since the MAC queue of the receiving communication device DEV-2 is assumed to be full.

After having received the information on the full MAC queue of the communication device DEV-2, the FCSL of the communication device DEV-1 sends a queue polling request to its MAC layer using an MAC-XX-QPOLL.request primitive, and the MAC layer of the communication device DEV-1 sends a queue polling control frame QPOLL_CTRL_Frame to the MAC layer of the communication device DEV-2 to check the status of the individual queues of the communication device DEV-2. As soon as the MAC layer of the communication device DEV-1 thereafter receives an immediate acknowledgement frame indicating a buffer size > "0", the MAC layer of the communication device DEV-1 informs the FCSL of the communication device DEV-1 of the available buffer size by using the confirmation primitive MAC-XX-DATA.confirm. Thereafter, the same process starts again as already discussed before with respect to Fig. 8.

## Claims

1. A method for transmitting information from a transmitting device (1) to a receiving device (2) through a communication channel (3) in a communication system, comprising the steps of
transmitting information from said transmitting device (1) to said receiving device (2),
checking whether the receiving device (2) has received the information without errors, and
transmitting an acknowledgement notification to the transmitting device (1) if the receiving device (2) has received the information without errors, the acknowledgement notification comprising an indication on a capability of said receiving device (2) to receive further information from said transmitting device (1).

2. The method according to claim 1, wherein said acknowledgement notification is transmitted from said receiving device (2) to said transmitting device (1) if a frame of information has been received by the receiving device (2) without errors.

3. The method according to claim 1 or claim 2, wherein said acknowledgement notification is transmitted from said receiving device (2) to said transmitting device (1) as an immediate acknowledgement frame notification.

4. The method according to claim 1 or claim 2, wherein said acknowledgement notification is transmitted from said receiving device (2) to said transmitting device (1) as a burst acknowledgement frame notification.

5. The method according to any one of claims 1-4, wherein said acknowledgement notification comprises an information on a maximum number of additional frames which can be received by said receiving device (2) from said transmitting device (1).

6. The method according to any one of claims 1-5, wherein said acknowledgement notification comprises an information on a free buffer size of said receiving device (2) available for receiving further information from said transmitting device (1).

7. The method according to any one of claims 1-6, wherein said communication system is a communication system according to the ultra-wideband technology.

8. The method according to any one of claims 1-7, wherein said communication system is a communication system according to the multiband OFDM alliance standard.

9. The method according to any one of claims 1-8, wherein said acknowledgement notification is transmitted by a media access controller layer of said receiving device (2).

10. The method according to any one of claims 1-9, wherein said acknowledgement notification is forwarded by a media access controller layer to higher layers at said transmitting device (1).

11. The method according to any one of claims 1-10, further comprising the step of checking the capability of the receiving device (2) to receive further information by said transmitting device (1).

12. The method according to claim 11, further comprising the step of transmitting a queue polling request from said transmitting device (1) to said receiving device (2) in order to check a queue status of said receiving device (2).

13. The method according to claim 12, wherein said queue polling request is transmitted by a media access controller layer of said transmitting device (1).

14. The method according to claim 12 or claim 13, wherein the acknowledgement notification is transmitted from the receiving device (2) to the transmitting device (1) after having received the queue polling request and having checked the status of at least one queue of the receiving device (2).

15. The method according to any one of claims 1-14, further comprising the step of transmitting a result of the checking step from the receiving device (2) to the transmitting device (1).

16. Communication system, comprising
a transmitting device (1) for transmitting information, and
a receiving device (2) being coupled to said transmitting device (1) through a communication channel (3) for receiving said information from said transmitting device (1) through said communication channel (3),
said receiving device (2) comprising control means (8) for checking whether said receiving device (2) has received said information from the transmitting device (1) without errors and for sending an acknowledgement notification to said transmitting device (1) if said information has been received without errors, said acknowledgement notification comprising an indication on a capability of said receiving device (2) to receive further information from said transmitting device (1).

17. The communication system according to claim 16, wherein said communication system is designed to perform the method according to any one of claims 1-15.
